# EUROPÄISCHE PATENTSCHRIFT

(11) **EP 2 265 451 B1**
(45) Veröffentlichungstag und Bekanntmachung des Hinweises auf die Patenterteilung: **30.05.2012**
(21) Anmeldenummer: 09719485.6
(22) Anmeldetag: 07.03.2009
(51) Int. Cl.: B60D 1/54

(54) **VERSCHWENKBARE ANHÄNGERKUPPLUNG**
PIVOTABLE TRAILER COUPLING
DISPOSITIF D'ATTELAGE PIVOTANT POUR REMORQUE

(30) Priorität: 13.03.2008 DE 102008014135
(43) Veröffentlichungstag der Anmeldung: 29.12.2010
(73) Patentinhaber: Schaeffler Technologies AG & Co. KG, 91074 Herzogenaurach (DE)
(72) Erfinder: LUNZ, Erich, 91475 Lonnerstadt (DE)
(86) Internationale Anmeldenummer: PCT/EP2009/001654
(87) Internationale Veröffentlichungsnummer: WO 2009/112217

(56) Entgegenhaltungen:
- WO-A-03/072375
- DE-U1-202006 011 346
- FR-A- 2 227 739
- US-B1- 6 712 381

## Beschreibung

Die Erfindung betrifft eine Anhängerkupplung für ein Fahrzeug gemäß dem Oberbegriff des Anspruchs 1. Eine gattungsgemäße Anhängerkupplung umfasst eine fest mit dem Unterboden des Fahrzeugs verbundene Halterung und einen Kupplungsschaft, dessen erstes Ende schwenkbar in der Halterung gelagert ist und dessen zweites Ende mit einem Kupplungsglied versehen ist und eine Biegung aufweist. Der Kupplungsschaft ist in einer Kuppelstellung im Wesentlichen in Fahrzeuglängsrichtung ausgerichtet, wobei das die Biegung aufweisende Ende von der Fahrbahn weg nach oben ausgerichtet ist. In einer Aufbewahrungsstellung ist der Kupplungsschaft unterhalb des Fahrzeugs angeordnet, wobei das die Biegung aufweisende Ende des Kupplungsschaftes im Wesentlichen in einer horizontal zur Fahrbahn verlaufenden Ebene angeordnet ist.

In letzter Zeit werden statt der starren Anhängerkupplungen zunehmend auch abnehmbare Anhängerkupplungen verwendet, die falls sie nicht für Transportaufgaben benötigt werden, vom Fahrzeug entfernt werden können. Auf diese Weise sollen Verschmutzungen an der Bekleidung beim Beladen des Kofferraums vermieden werden. Außerdem haben sich Anhängerkupplungen als ungünstig bei Einparksystemen erwiesen, da sie die Sensoren dieser Systeme stören können. Nachteilig bei diesen abnehmbaren Kupplungen ist, dass diese sehr unbequem zu montieren bzw. zu demontieren sind. Am einfachsten gestaltet sich die Montage / Demontage mit einer Hebebühne, was aber zumeist einen Werkstattbesuch mit sich bringt. Als unbequemere Alternative kann man sich natürlich auch unter das Auto legen und die nötigen Arbeiten selber ausführen.

Weiterhin sind schwenkbaren Anhängerkupplungen bekannt, die beispielsweise über den Innenraum des Kofferraums geschwenkt werden. Die bekannten Lösungen sind teilweise sehr aufwendig und kompliziert konstruiert. Einige zielen darauf, die Stoßstange zu unterfahren, während bei anderen Lösungen Kupplungselemente in die Ladefläche bei Transportern oder Kombis hineinragen.

In der DE 101 08 382 A1 ist eine bewegliche Anhängerkupplung beschrieben, mittels derer Pendelbewegungen bei Fahrzeuggespannen vermieden werden sollen. Die Anhängerkupplung ist über eine Führung am Zugfahrzeug befestigt und mittels Stellglieder in der Führung mit einer horizontalen Komponente quer zur Längsachse des Zugfahrzeugs verfahrbar. Die Bewegung der Anhängerkupplung wird von einem Steuergerät entsprechend einer in dem Steuergerät implementierten Fahrdynamikregelung geregelt. Die Anhängerkupplung wird in Richtung der Pendelbewegung der Anhängerdeichsel bewegt, so dass der Winkel zwischen Zugfahrzeug und Anhängerdeichsel bei Auftreten einer Pendelbewegung durch die Bewegung der Anhängerkupplung verkleinert wird. Die Beweglichkeit der Anhängerkupplung dient nicht dazu, diese in einer nicht zugängliche Position zu verschwenken. Die Anhängerkupplung ist stets zugänglich.

Die FR 2 450 167 betrifft eine unter die Karosserie eines Fahrzeugs einziehbare Kupplungsvorrichtung. Die Kupplungsvorrichtung kann parallel zur Längsachse des Fahrzeugs bewegt werden. Außerdem ist sie um ihre eigene Achse und um eine vertikale Achse drehbar. Zum Einziehen der Kupplungsvorrichtung wird diese in ein unter der Karosserie angeordnetes Gehäuse bewegt. Hierzu wird die Kupplungsvorrichtung zunächst parallel zur Längsachse bewegt und anschließend um 90 Grad um ihre Längsachse und anschließend um eine vertikale Achse verschwenkt. Der verwendete Aufbau scheint relativ aufwendig zu sein.

Aus der DE 10 2004 021 895 B4 ist eine Anhängerkupplung für ein Fahrzeug mit einem fahrzeugfesten Lager und einer an dem Lager angeordneten und gegenüber diesem zwischen einer aktiven und einer passiven Position verschwenkbaren Kupplungseinrichtung bekannt. Eine flexible abdichtende Abdeckung überdeckt zumindest einen Teilbereich des Lagers und des Kupplungsbereichs. Ein Distanzelement verhindert ein Einklemmen der flexiblen Abdeckung zwischen Lager und Kupplungseinrichtung. In ihrer passiven Position liegt die Anhängerkupplung am hinteren Teil des Fahrzeugs an. Damit reduziert sich zwar die Gesamtlänge des Fahrzeugs gegenüber der aktiven Position. Nach wie vor kann es jedoch zu Verschmutzungen der Bekleidung beim Beladen des Kofferraums kommen.

In der DE 198 58 978 B5 ist eine schwenkbare Anhängerkupplung beschrieben, deren Kugelkopfstange in einem Gehäuse um eine Schwenkachse zwischen einer Ruhestellung und einer Betriebsstellung schwenkverstellbar gelagert ist. Hierzu weist die Kugelkopfstange an ihrem im Gehäuse gelagerten Ende einen Lagerblock auf. Die Kugelkopfstange ist zumindest in ihrer Betriebsstellung im Gehäuse derart verspannt, dass Relativbewegungen zwischen der Stange und dem Gehäuse vermieden werden. Durch die Verspannung soll die fahrdynamische Stabilität verbessert werden und eine Geräuschentwicklung in der Anhängerkupplung reduziert werden. Die Anhängerkupplung ist derart mit ihrem Gehäuse am Fahrzeug befestigt, dass die Stange in ihrer Ruhestellung von außen nicht erkennbar ist.

Die EP 1 557 300 A1 beinhaltet eine Anhängerkupplung mit einem Lagerelement, welches zwischen einer Rückseite eines unteren Heckbereichs und einem Stoßfänger eines Fahrzeugs montierbar ist. Ein Anhängeelement mit einem Kugelhals und einer Kupplungskugel kann von einer Arbeitsstellung in eine Ruhestellung bewegt werden, in welcher Kugelhals und Kupplungskugel in dem Zwischenraum zwischen Stoßfänger und Rückseite des unteren Heckbereichs angeordnet sind. Das bewegbare Anhängeelement ist mittels einer Fixiereinrichtung zumindest in der Arbeitsstellung an dem Lagerelement formschlüssig festlegbar. Das Anhängeelement kann relativ zum Lagerelement in einer Verschieberichtung zwischen einer das Anhängeelement gegenüber dem Lagerelement mehrachsig schwenkbar lagernden Schwenkstellung und einer das Anhängeelement gegenüber dem Lagerelement drehfest haltenden Fixierstellung verschoben werden.

Aus der DE 100 04 523 A1 ist eine Anhängerkupplung bekannt, bei der der Kupplungsarm zwischen einer von einem Fahrzeugteil, insbesondere einem Stoßfänger, verdeckten Nichtgebrauchsstellung und einer freiliegenden Gebrauchsstellung verstellbar ist. Zum Verstellung dient eine vom Fahrer des Fahrzeugs im Fahrzeug-Innenraum einschaltbare Motoranordnung. Die Kupplung wird zunächst nach unten entlang einer vertikalen Achse verschoben, anschließend ca. 90° um diese vertikale gedreht und nun wieder vertikal nach oben hinter die Stoßstange versenkt.

Bei der in der DE 200 03 480 U1 beschriebenen Anhängerkupplung ist der Kupplungsschaft zwischen einer Kuppelstellung und einer Aufbewahrungsstellung verschwenkbar an einer fest mit dem Fahrzeug verbundenen Halterung abgestützt. In der Aufbewahrungsstellung ist das Kupplungsglied nach vorne und zur Seite gerichtet, so dass der Kupplungsschaft in dieser Stellung nicht mehr heckseitig über das Fahrzeug übersteht und unter dem Fahrzeug untergebracht werden kann. Der Kupplungsschaft ist vorzugsweise in einem Rohrstück gehalten, welches in Drehlagern schwenkbar an der Halterung abgestützt ist. Zum Arretieren des Kupplungsschaftes in der Kuppelstellung weist der Kupplungsschaft wie auch bei der FR 2 450 167 eine Durchgangsbohrung auf, die von einem in der Halterung gelagerten Arretierstift durchdrungen ist. Die Kupplung wird nach dem Verschwenken in horizontaler Richtung verschoben.

Aus der gattungsbildenden FR 2 227 739 A1 und US 6 712 381 B1 sind Kupplungsvorrichtungen bekannt, die um eine vertikale Achse und um ihre Längsachse schwenkbar sind. Auch bei diesen Vorrichtungen sind Arretierstifte nötig, um den Kupplungsschaft zu sichern.

Die Aufgabe der vorliegenden Erfindung besteht darin, eine verbesserte verschwenkbare Anhängerkupplung für ein Fahrzeug zur Verfügung zu stellen, die in einer Ruhestellung platzsparend am Unterboden des Fahrzeugs angeordnet ist, welche sich durch einen einfachen Aufbau auszeichnet und mit welcher nur vergleichsweise geringe Zusatzkosten bei der Montage verbunden sind.

Zur Lösung der erfindungsgemäßen Aufgabe dient eine Anhängerkupplung gemäß dem beigefügten Anspruch 1. Erfindungsgemäß erfolgt zum Verbringen eines Kupplungsschaftes einer Anhängerkupplung von einer Aufbewahrungsstellung in eine Kuppelstellung ein Verschwenken des Kupplungsschaftes um eine vertikale Achse mit einem ersten Stellmittel und ein Verschwenken des Kupplungsschaftes um seine horizontale Längsachse mit einem zweiten Stellmittel. Die erfindungsgemäßen Anhängerkupplung zeichnet sich dadurch aus, dass die zur Halterung des Kupplungsschaftes dienende Halterung ein erstes Lager mit einem mit dem Unterboden verbundenen feststehenden ersten Lagering (vorzugsweise der Innenring) und einem drehbaren zweiten Lagerring (vorzugsweise der Außenring) aufweist. An dem Außenring des ersten Lagers sind zwei sich gegenüberliegende zweite Lager angeordnet, wobei die zweiten Lager zum Lagern des Kupplungsschaftes dienen. Mittels des ersten Stellmittels ist vorzugsweise der Außenring gegenüber dem Innenring verdrehbar.

Weiterhin ist der Innenring des ersten Lagers über das zweite Stellmittel mit dem aus dem Unterboden ausgeschwenkten Kupplungsschaft verbunden. Durch Drehen des Außenrings des zweiten Lagers und eine Betätigung des zweiten Stellmittels wird ein Verschwenken des Kupplungsschaftes von der Aufbewahrungsstellung in die Kuppelstellung und umgekehrt ermöglicht.

In einer abgewandelten Ausführungsform kann eine Funktionsumkehr zwischen Außenring und Innenring vorgenommen werden, sodass der Innenring drehbar und der Außenring fest am Fahrzeugboden angeordnet sind.

Ein besonderer Vorteil der erfindungsgemäßen Lösung besteht darin, dass auf vergleichsweise relativ einfache Art und Weise ein Verschwenken des Kupplungsschaftes von der Aufbewahrungsstellung in die Kuppelstellung realisiert wird. Es entfallen die Sicherungselemente, die im Stand der Technik durch eine Durchgangsbohrung des Kupplungsschaftes angebracht sind. weiterhin muss keine axiale Verstellung des Kupplungsschaftes erfolgen, dadurch ist eine einfachere und preiswertere Lagerung des Kupplungsschaftes möglich.

Kupplungsschaftes von der Aufbewahrungsstellung in die Kuppelstellung realisiert wird. Es entfallen die Sicherungselemente, die im Stand der Technik durch eine Durchgangsbohrung des Kupplungsschaftes angebracht sind. weiterhin muss keine axiale Verstellung des Kupplungsschaftes erfolgen, dadurch ist eine einfachere und preiswertere Lagerung des Kupplungsschaftes möglich.

Ein Aufrichten des das Kupplungsglied tragenden Endes erfolgt erst, wenn der hierfür erforderliche Platz vorhanden ist, also erst nachdem der Kupplungsschaft aus dem Unterboden ausgeschwenkt ist.

In der Aufbewahrungsstellung ist das Kupplungsglied in einer horizontal zur Fahrbahn verlaufenden Ebene angeordnet. Hierdurch kann der Kupplungsschaft gemeinsam mit dem Kupplungsglied platzsparend unter dem Fahrzeug verstaut werden.

Bei einer vorteilhaften Ausführungsform ist der Außenring des ersten Lagers um etwa 90° drehbar. Außerdem hat es sich auch als sinnvoll erwiesen, wenn der Mechanismus zum Drehen des Kupplungsschaftes eine Drehung um etwa 90° um die Längsachse des Kupplungsschaftes ermöglicht. Hierdurch kann eine besonders platzsparende Aufbewahrung von Kupplungsschaft und Kupplungsglied realisiert werden.

Von Vorteil ist es, wenn der Außenring des ersten Lagers eine dem ersten Ende des Kupplungsschaftes gegenüberliegende Verzahnung als erstes Stellmittel aufweist und diese Verzahnung mit einem Zahnrad in Eingriff steht. Die Verzahnung des Außenrings des ersten Lagers kann als Schneckenrad ausgeführt sein. Durch Drehen des Zahnrades werden eine Drehung des Außenrings und damit ein Verschwenken des Kupplungsschaftes bewirkt.

Das Zahnrad kann manuell oder über einen Motor angetrieben werden. Der über zwei ineinander greifende Verzahnungen realisierte Verstellmechanismus stellt lediglich eine mögliche Ausführungsform dar. Andere Ausführungsformen sind durchaus möglich. Es muss lediglich sichergestellt werden, dass über diese eine Drehung des Außenrings realisiert werden kann.

Weiterhin ist es zweckmäßig, wenn das zweite Stellmittel zum Drehen des Kupplungsschaftes eine Verzahnung am Innenring des ersten Lagers und eine mit dieser in Eingriff bringbare Verzahnung am Kupplungsschaft umfasst. Zum Eingriff der beiden Verzahnung kommt es, wenn der Kupplungsschaft aus dem Unterboden ausgeschwenkt ist und somit genügend Platz zum Aufrichten des Kupplungsgliedes vorhanden ist.

Nach einer weiteren vorteilhaften Ausführungsform ist am Außenring des ersten Lagers eine Steckdose angeordnet. Beim Drehen des Außenrings wird die Steckdose gemeinsam mit dem Kupplungsschaft nach außen geschwenkt und steht somit zur Stromversorgung des Anhängers zur Verfügung.

Bei einer weiteren vorteilhaften Ausführungsform ist am Außenring des ersten Lagers eine Schutzabdeckung zum Verschließen einer beim Verschwenken des Kupplungsschaftes in Aufbewahrungsstellung entstehenden Öffnung angeordnet ist. Auf diese Weise kann eine Verschmutzung dieser Öffnung verhindert werden.

Weitere Vorteile, Einzelheiten und Weiterbildungen der vorliegenden Erfindung ergeben sich aus der nachfolgenden Beschreibung einer bevorzugten Ausführungsform, unter Bezugnahme auf die Zeichnung. Es zeigen:
- Fig. 1: eine erfindungsgemäße Anhängerkupplung in Kuppelstellung in einer Ansicht von hinten;
- Fig. 2: die erfindungsgemäße Anhängerkupplung in Aufbewahrungsstellung in einer Ansicht von hinten;
- Fig. 3: eine Schnittansicht der erfindungsgemäßen Anhängerkupplung entlang einer Linie A-A in Fig. 1;
- Fig. 4: die erfindungsgemäße Anhängerkupplung in Kuppelstellung in einer Ansicht von unten;
- Fig. 5: die erfindungsgemäße Anhängerkupplung in Aufbewahrungsstellung in einer Ansicht von unten;
- Fig. 6: das Verschwenken der erfindungsgemäßen Anhängerkupplung von der Aufbewahrungsstellung in die Kuppelstellung in einer Ansicht von unten.

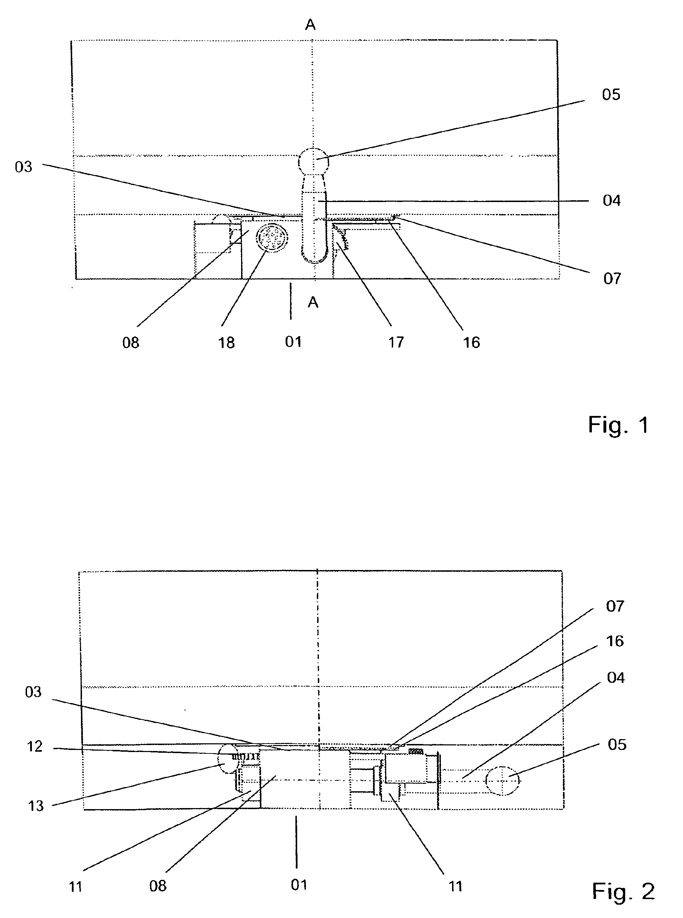

Die Beschreibung der Bestandteile der erfindungsgemäßen Anhängerkupplung erfolgt zunächst anhand der Fig. 1 bis 5. Die erfindungsgemäße Anhängerkupplung 01 umfasst eine fest mit dem Unterboden 02 eines Fahrzeuges verbundene Halterung 03 sowie einen Kupplungsschaft 04. Ein erstes Ende des Kupplungsschaftes 04 ist um seine Längsachse schwenkbar in der Halterung 03 gelagert. An einem zweiten Ende des Kupplungsschaftes 04 ist ein Kupplungsglied 05 angeordnet. Dieses zweite Ende ist mit einer Biegung 06 versehen.

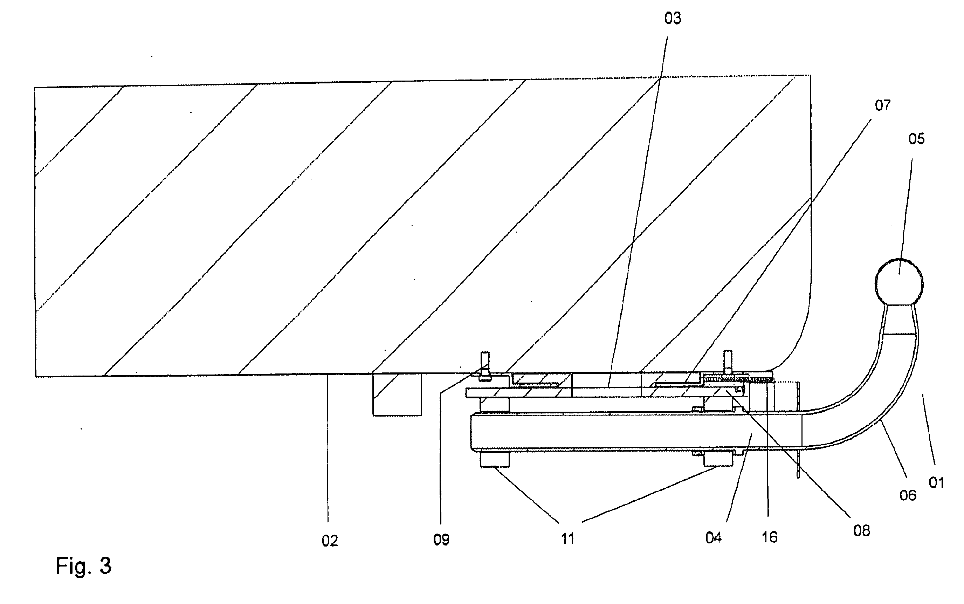

Fig. 3 kann entnommen werden, dass der Kupplungsschaft 04 in Kuppelstellung im Wesentlichen in Fahrzeuglängsrichtung ausgerichtet ist. Das die Biegung 06 aufweisende Ende des Kupplungsschaftes 04 ist in der Kuppelstellung von der Fahrbahn weg nach oben gerichtet.

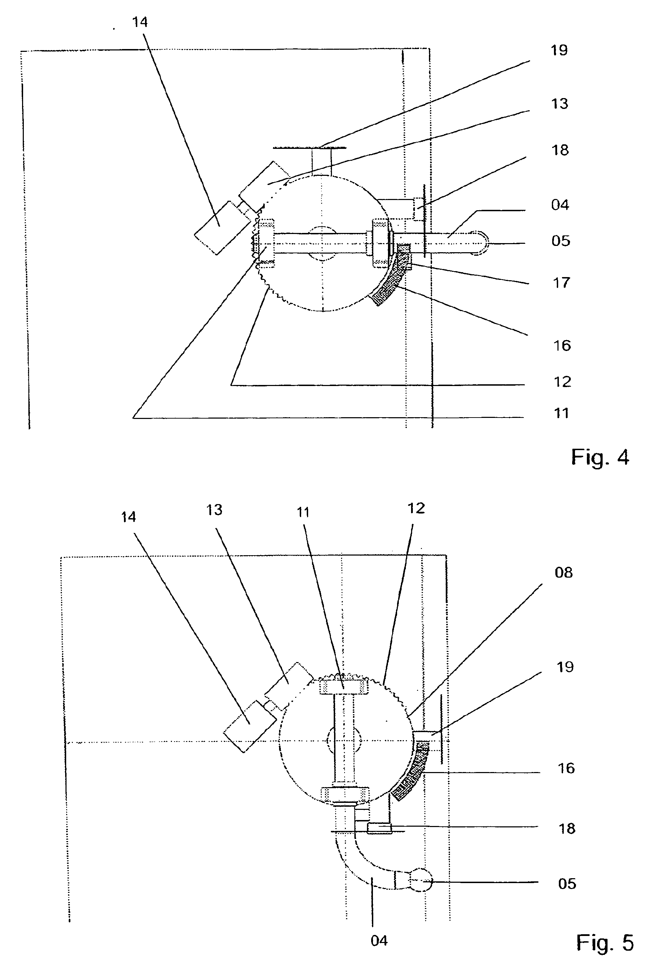

Wie Fig. 5 entnommen werden kann, ist der Kupplungsschaft 04 in einer Aufbewahrungsstellung unterhalb des Fahrzeugs angeordnet. Das die Biegung 06 aufweisende Ende des Kupplungsschaftes 04 ist in dieser Aufbewahrungsstellung im Wesentlichen in einer horizontal zur Fahrbahn verlaufenden Ebene angeordnet.

Die zum Lagern des Kupplungsschaftes 04 dienende Halterung 03 umfasst ein erstes Lager mit einem Innenring 07 und einem Außenring 08. Der Innenring 07 ist vorzugsweise über mechanische Verbindungsmittel, beispielsweise Schrauben 09, am Unterboden 02 des Fahrzeugs befestigt. Als zweckmäßig hat es sich erwiesen, wenn der Innenring 07 als Blechumformteil ausgeführt ist. Am Außenring 08 sind zwei sich gegenüberliegende zweite Lager 11 angeordnet. Diese zweiten Lager 11 dienen zum Lagern des Kupplungsschaftes 04. Das erste und / oder die zweiten Lager können Wälzlager oder Gleitlager sein.

Der Außenring 08 des ersten Lagers weist eine dem ersten Ende des Kupplungsschaftes gegenüberliegende Verzahnung 12 auf. Diese Verzahnung 12, die beispielsweise als Schneckenrad ausgeführt sein kann, steht in Eingriff mit einem Zahnrad 13. Verzahnung 12 und Zahnrad 13 bilden ein erstes Stellmittel, welches dem Verschwenken des Kupplungsschaftes um eine vertikale Achse dient. In der dargestellten Ausführungsform kann das Zahnrad 13 über einen Motor 14 angetrieben werden. Alternativ kann auch ein manueller Antrieb erfolgen. Ein Drehen des Zahnrads 13 bewirkt ein Drehen des Außenrings 08 des ersten Lagers und dadurch ein Herausschwenken des Kupplungsschaftes 04 aus dem Unterboden 02 bzw. ein Einschwenken des Kupplungsschaftes 04. Der Außenring 08 kann vorzugsweise um etwa 90° gedreht werden. Im Ergebnis dieser Drehung ist der Kupplungsschaft 04 beim Herausschwenkvorgang im Wesentlichen in Fahrzeuglängsrichtung ausgerichtet.

Der Innenring 07 des ersten Lagers ist mit einer Verzahnung 16 versehen. Die Verzahnung 16 kann mit einer Verzahnung 17 am Kupplungsschaft 04 in Eingriff gebracht werden. Diese beiden Verzahnungen 16, 17 bilden gemeinsam ein zweites Stellmittel zum Drehen des Kupplungsschaftes 04 um dessen Längsachse. Zum Eingriff der beiden Verzahnungen 16, 17 kommt es bei aus dem Unterboden 02 ausgeschwenktem Kupplungsschaft 04. Zu diesem Zeitpunkt ist der zum Aufrichten des Kupplungsgliedes 05 erforderliche Raum vorhanden. Im Ergebnis der Drehung richtet sich das Kupplungsglied 05 in Kuppelstellung auf bzw. verlässt die Kuppelstellung, wenn die Kupplung in die Aufbewahrungsstellung zurück verschwenkt werden soll. Als besonders günstig hat sich dabei eine Drehung um etwa 90° um die Längsachse des Kupplungsschaftes 04 erwiesen.

Am Außenring 08 des ersten Lagers ist eine Steckdose 18 angeordnet, welche zur Stromversorgung des an die Kupplung anzukoppelnden Anhängers (nicht gezeigt) dient. Die Steckdose 18 wird gemeinsam mit dem Kupplungsschaft 04 aus dem Unterboden 02 herausgeschwenkt bzw. unter das Fahrzeug verschwenkt, wenn die Aufbewahrungsstellung eingenommen wird.

Der Außenring 08 des ersten Lagers kann weiterhin eine Schutzabdeckung 19 aufweisen. Die Schutzabdeckung 19 dient bei in Aufbewahrungsstellung verschwenktem Kupplungsschaft 04 zum Verschließen der dabei entstehenden Öffnung und schützt diese somit vor Verschmutzung.

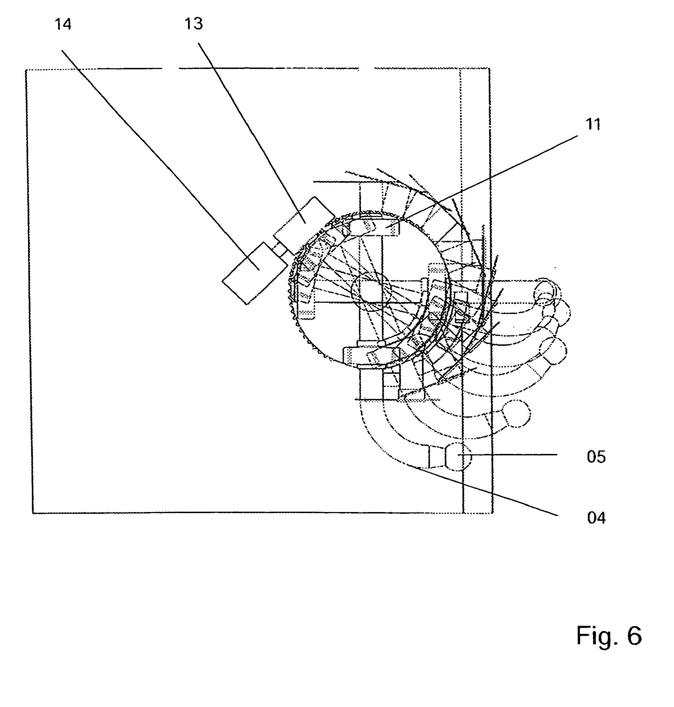

Fig. 6 kann das Verschwenken der erfindungsgemäßen Anhängerkupplung von der Aufbewahrungsstellung in die Kuppelstellung entnommen werden. Der Motor 14 treibt das Zahnrad 13 an. Dabei wird ein Drehen des Außenrings 08 des ersten Lagers und somit ein Verschwenken des Kupplungsschaftes 04 aus dem Unterboden 02 des Fahrzeugs bewirkt. Sobald der Kupplungsschaft 04 aus dem Unterboden 02 herausgeschwenkt ist, greifen die Verzahnungen 16, 17 des Innenrings 07 des ersten Lagers und des Kupplungsschaftes 04 ineinander ein, wodurch während des weiteren Verschwenkens ein Aufrichten des Kupplungsgliedes 05 bewirkt wird. Die Anhängerkupplung ist nun betriebsbereit. Der Kupplungsschaft 04 ist im vollständig ausgeschwenkten Zustand im Wesentlichen in Fahrzeuglängsrichtung ausgerichtet und das Kupplungsglied 05 ist von der Fahrbahn weg nach oben gerichtet.

### Bezugszeichenliste

- 01: Anhängerkupplung
- 02: Unterboden
- 03: Halterung
- 04: Kupplungsschaft
- 05: Kupplungsglied
- 06: Biegung des Kupplungsschaftes
- 07: Innenring des ersten Lagers
- 08: Außenring des ersten Lagers
- 09: Schrauben
- 10: -
- 11: zweite Lager
- 12: Verzahnung des Außenrings des ersten Lagers
- 13: Zahnrad
- 14: Motor
- 15: -
- 16: Verzahnung des Innenrings des ersten Lagers
- 17: Verzahnung am Kupplungsschaft
- 18: Steckdose
- 19: Schutzabdeckung

## Patentansprüche

1. Anhängerkupplung (01) für ein Fahrzeug mit einem Kupplungsschaft (04) und mit einer fest mit einem Unterboden (02) des Fahrzeugs verbundenen Halterung, wobei die Halterung ein erstes und ein zweites Stellmittel zum Verschwenken des Kupplungsschaftes (04) in eine Kuppelstellung und in eine Aufbewahrungsstellung aufweist, wobei das erste Stellmittel zum Verschwenken des Kupplungsschaftes (04) um eine vertikale Achse und das zweite Stellmittel zum Verschwenken des Kupplungsschaftes (04) um seine Längsachse dient, **dadurch gekennzeichnet, dass**
a. ein erstes Lager einen mit dem Unterboden (02) verbundenen ersten Lagerring (07) und einen drehbaren zweiten Lagering (08) aufweist,
b. der Kupplungsschaft (04) um seine Längsachse verschwenkbar an dem drehbaren zweiten Lagerring (08) des ersten Lagers angeordnet ist,
c. der feststehende erste Lagerring (07) des ersten Lagers über das zweite Stellmittel mit dem aus dem Unterboden (02) ausgeschwenkten Kupplungsschaft (04) verbunden ist,
wobei ein Drehen des zweiten Lagerrings (08) des ersten Lagers und eine Betätigung des zweiten Stellmittels ein Verschwenken des Kupplungsschaftes (04) von der Aufbewahrungsstellung in die Kuppelstellung und umgekehrt ermöglicht.

2. Anhängerkupplung (01) nach Anspruch 1, **dadurch gekennzeichnet, dass** der erste Lagerring als Innenring (07) und der zweite Lagerring als Außenring (08) ausgebildet ist.

3. Anhängerkupplung (01) nach Anspruch 2, **dadurch gekennzeichnet, dass** der Außenring (08) des ersten Lagers um etwa 90° drehbar ist.

4. Anhängerkupplung (01) nach einem der Ansprüche 1 bis 3, **dadurch gekennzeichnet, dass** das zweite Stellmittel eine Drehung um etwa 90° um die Längsachse des Kupplungsschaftes (04) bewirkt.

5. Anhängerkupplung (01) nach einem der Ansprüche 2 bis 4, **dadurch gekennzeichnet, dass** der Außenring (08) des ersten Lagers als erstes Stellmittel eine dem ersten Ende des Kupplungsschaftes (04) gegenüberliegende Verzahnung (12) aufweist, dass diese Verzahnung (12) mit einem Zahnrad (13) in Eingriff steht.

6. Anhängerkupplung (01) nach Anspruch 5, **dadurch gekennzeichnet, dass** die Verzahnung des Außenrings (08) des ersten Lagers als Schneckenrad ausgeführt ist.

7. Anhängerkupplung (01) nach Anspruch 5 oder 6, **dadurch gekennzeichnet, dass** das Zahnrad (13) manuell antreibbar ist.

8. Anhängerkupplung (01) nach Anspruch 5 oder 6, **dadurch gekennzeichnet, dass** das Zahnrad (13) über einen Motor (14) antreibbar ist.

9. Anhängerkupplung (01) nach einem der Ansprüche 2 bis 8, **dadurch gekennzeichnet, dass** das zweite Stellmittel zum Drehen des Kupplungsschaftes (04) eine Verzahnung (16) am Innenring (07) des ersten Lagers und eine mit dieser in Eingriff bringbare Verzahnung (17) am Kupplungsschaft (04) umfasst, wobei die Verzahnung (17) am Kupplungsschaft (04) in die Verzahnung (16) am Innenring (07) des ersten Lagers bei aus dem Unterboden (02) ausgeschwenkten Kupplungsschaft (04) eingreift.

10. Anhängerkupplung (01) nach einem der Ansprüche 2 bis 9, **dadurch gekennzeichnet, dass** am Außenring (08) des ersten Lagers eine Steckdose (18) angeordnet ist.

11. Anhängerkupplung (01) nach einem der Ansprüche 1 bis 10, **dadurch gekennzeichnet, dass** der erste Lagerring (07) des ersten Lagers über mechanische Verbindungsmittel (09) am Unterboden (02) des Fahrzeugs befestigt ist.

12. Anhängerkupplung (01) nach einem der Ansprüche 1 bis 11, **dadurch gekennzeichnet, dass** am drehbaren zweiten Lagerring (08) des ersten Lagers zwei sich gegenüberliegende zweite Lager (11) angeordnet sind, wobei die zweiten Lager (11) zum Lagern des Kupplungsschaftes (04) dienen.

13. Anhängerkupplung (01) nach Anspruch 12, **dadurch gekennzeichnet, dass** die zweiten Lager (11) Wälzlager oder Gleitlager sind.

14. Anhängerkupplung (01) nach einem der Ansprüche 1 bis 13, **dadurch gekennzeichnet, dass** das erste Lager (07, 08) ein Wälzlager oder ein Gleitlager ist.

15. Anhängerkupplung (01) nach einem der Ansprüche 1 bis 14, **dadurch gekennzeichnet, dass** am drehbaren zweiten Lagerring (08) des ersten Lagers eine Schutzabdeckung (19) zum Verschließen einer beim Verschwenken des Kupplungsschaftes (04) in Aufbewahrungsstellung entstehenden Öffnung angeordnet ist.

## Claims

1. Trailer coupling (01) for a vehicle, with a coupling shaft (04) and with a holder which is connected fixedly to an underbody (02) of the vehicle, wherein the holder has a first and a second adjusting means for pivoting the coupling shaft (04) into a coupling position and into a storage position, wherein the first adjusting means serves for pivoting the coupling shaft (04) about a vertical axis and the second adjusting means serves for pivoting the coupling shaft (04) about the longitudinal axis thereof, **characterized in that**
a. a first bearing has a first bearing ring (07) connected to the underbody (02), and a rotatable second bearing ring (08),
b. the coupling shaft (04) is arranged pivotably about the longitudinal axis thereof on the rotatable second bearing ring (08) of the first bearing,
c. the fixed first bearing ring (07) of the first bearing is connected via the second adjusting means to the coupling shaft (04) pivoted out from the underbody (02),
wherein rotation of the second bearing ring (08) of the first bearing and actuation of the second adjusting means permit the coupling shaft (04) to pivot from the storage position into the coupling position, and vice versa.

2. Trailer coupling (01) according to Claim 1, **characterized in that** the first bearing ring is designed as an inner ring (07) and the second bearing ring is designed as an outer ring (08).

3. Trailer coupling (01) according to Claim 2, **characterized in that** the outer ring (08) of the first bearing is rotatable through approximately 90°.

4. Trailer coupling (01) according to one of Claims 1 to 3, **characterized in that** the second adjusting means causes rotation through approximately 90° about the longitudinal axis of the coupling shaft (04).

5. Trailer coupling (01) according to one of Claims 2 to 4, **characterized in that** the outer ring (08) of the first bearing as the first adjusting means has a toothing (12) opposite the first end of the coupling shaft (04), and **in that** said toothing (12) is in engagement with a gearwheel (13).

6. Trailer coupling (01) according to Claim 5, **characterized in that** the toothing of the outer ring (08) of the first bearing is designed as a worm wheel.

7. Trailer coupling (01) according to Claim 5 or 6, **characterized in that** the gearwheel (13) is driveable manually.

8. Trailer coupling (01) according to Claim 5 or 6, **characterized in that** the gearwheel (13) is driveable via a motor (14).

9. Trailer coupling (01) according to one of Claims 2 to 8, **characterized in that** the second adjusting means for rotating the coupling shaft (04) comprises a toothing (16) on the inner ring (07) of the first bearing and a toothing (17), which can be brought into engagement with the first toothing, on the coupling shaft (04), wherein the toothing (17) on the coupling shaft (04) engages in the toothing (16) on the inner ring (07) of the first bearing when the coupling shaft (04) is pivoted out from the underbody (02).

10. Trailer coupling (01) according to one of Claims 2 to 9, **characterized in that** a socket (18) is arranged on the outer ring (08) of the first bearing.

11. Trailer coupling (01) according to one of Claims 1 to 10, **characterized in that** the first bearing ring (07) of the first bearing is fastened to the underbody (02) of the vehicle via mechanical connecting means (09).

12. Trailer coupling (01) according to one of Claims 1 to 11, **characterized in that** two opposite second bearings (11) are arranged on the rotatable second bearing ring (08) of the first bearing, wherein the second bearings (11) serve for the mounting of the coupling shaft (04).

13. Trailer coupling (01) according to Claim 12, **characterized in that** the second bearings (11) are rolling bearings or plain bearings.

14. Trailer coupling (01) according to Claims 1 to 13, **characterized in that** the first bearing (07, 08) is a rolling bearing or a plain bearing.

15. Trailer coupling (01) according to one of Claims 1 to 14, **characterized in that** a protective covering (19) for closing an opening produced during the pivoting of the coupling shaft (04) into the storage position is arranged on the rotatable second bearing ring (08) of the first bearing.

## Revendications

1. Dispositif d'attelage pour remorque (01) pour un véhicule, comprenant une tige d'attelage (04) et comprenant un support relié fixement à un dessous de caisse (02) du véhicule, le support comprenant un premier et un deuxième moyen de réglage pour faire pivoter la tige d'attelage (04) dans une position d'attelage et dans une position de rangement, le premier moyen de réglage servant à faire pivoter la tige d'attelage (04) autour d'un axe vertical et le deuxième moyen de réglage servant à faire pivoter la tige d'attelage (04) autour de son axe longitudinal, **caractérisé en ce que**
a. un premier palier comprend une première bague de palier (07) reliée au dessous de caisse (02) et une deuxième bague de palier (08) rotative,
b. la tige d'attelage (04) est disposée, de manière pivotante autour de son axe longitudinal, sur la deuxième bague de palier (08) rotative du premier palier,
c. la première bague de palier (07) fixe du premier palier est reliée, par l'intermédiaire du deuxième moyen de réglage, à la tige d'attelage (04) pivotée vers l'extérieur hors du dessous de caisse (02),
une rotation de la deuxième bague de palier (08) du premier palier et un actionnement du deuxième moyen de réglage permettant un pivotement de la tige d'attelage (04) de la position de rangement à la position d'attelage et inversement.

2. Dispositif d'attelage pour remorque (01) selon la revendication 1, **caractérisé en ce que** la première bague de palier est réalisée en tant que bague intérieure (07) et la deuxième bague de palier est réalisée en tant que bague extérieure (08).

3. Dispositif d'attelage pour remorque (01) selon la revendication 2, **caractérisé en ce que** la bague extérieure (08) du premier palier peut tourner d'environ 90°.

4. Dispositif d'attelage pour remorque (01) selon l'une quelconque des revendications 1 à 3, **caractérisé en ce que** le deuxième moyen de réglage provoque une rotation d'environ 90° autour de l'axe longitudinal de la tige d'attelage (04).

5. Dispositif d'attelage pour remorque (01) selon l'une quelconque des revendications 2 à 4, **caractérisé en ce que** la bague extérieure (08) du premier palier comprend en tant que premier moyen de réglage une denture (12) qui fait face à la première extrémité de la tige d'attelage (04), et **en ce que** cette denture (12) est en prise avec une roue dentée (13).

6. Dispositif d'attelage pour remorque (01) selon la revendication 5, **caractérisé en ce que** la denture de la bague extérieure (08) du premier palier est réalisée en tant que roue à denture hélicoïdale.

7. Dispositif d'attelage pour remorque (01) selon la revendication 5 ou 6, **caractérisé en ce que** la roue dentée (13) peut être entraînée manuellement.

8. Dispositif d'attelage pour remorque (01) selon la revendication 5 ou 6, **caractérisé en ce que** la roue dentée (13) peut être entraînée au moyen d'un moteur (14).

9. Dispositif d'attelage pour remorque (01) selon l'une quelconque des revendications 2 à 8, **caractérisé en ce que** le deuxième moyen de réglage comporte, pour la rotation de la tige d'attelage (04), une denture (16) sur la bague intérieure (07) du premier palier et une denture (17) sur la tige d'attelage (04) qui peut être amenée en prise avec cette denture (16), la denture (17) sur la tige d'attelage (04) venant en prise dans la denture (16) sur la bague intérieure (07) du premier palier lorsque la tige d'attelage (04) est pivotée vers l'extérieur hors du dessous de caisse (02).

10. Dispositif d'attelage pour remorque (01) selon l'une quelconque des revendications 2 à 9, **caractérisé en ce qu'**une prise de courant (18) est disposée sur la bague extérieure (08) du premier palier.

11. Dispositif d'attelage pour remorque (01) selon l'une quelconque des revendications 1 à 10, **caractérisé en ce que** la première bague de palier (07) du premier palier est fixée au dessous de caisse (02) du véhicule grâce à des moyens de liaison mécaniques (09).

12. Dispositif d'attelage pour remorque (01) selon l'une quelconque des revendications 1 à 11, **caractérisé en ce que** deux deuxièmes paliers (11) se faisant face sont disposés sur la deuxième bague de palier (08) rotative du premier palier, les deuxièmes paliers (11) servant au montage de la tige d'attelage (04).

13. Dispositif d'attelage pour remorque (01) selon la revendication 12, **caractérisé en ce que** les deuxièmes paliers (11) sont des paliers à roulement ou des paliers lisses.

14. Dispositif d'attelage pour remorque (01) selon l'une quelconque des revendications 1 à 13, **caractérisé en ce que** le premier palier (07, 08) est un palier à roulement ou un palier lisse.

15. Dispositif d'attelage pour remorque (01) selon l'une quelconque des revendications 1 à 14, **caractérisé en ce qu'**un couvercle de protection (19), qui est destiné à fermer une ouverture se créant lors du pivotement de la tige d'attelage (04) dans la position de rangement, est disposé sur la deuxième bague de palier (08) rotative du premier palier.
